Europäisches Patentamt

European Patent Office

Office européen des brevets

(11) Publication number: 0 299 666
A2

# (12) EUROPEAN PATENT APPLICATION

(21) Application number: 88306133.5

(22) Date of filing: 06.07.88

(51) Int. Cl.⁴: H04N 1/387

(30) Priority: 13.07.87 US 74177

(43) Date of publication of application:
18.01.89 Bulletin 89/03

(84) Designated Contracting States:
DE ES FR GB IT NL SE

(71) Applicant: SPERRY MARINE INC.
Route 29 North & Hydraulic Road
Charlottesville Virginia 22901(US)

(72) Inventor: Baginski, Mark J.
General Delivery
Boyd Tavern Virginia 22947(US)
Inventor: Bean, Donald E.
Route No. 2 Box 4
Ruckerville Virginia 22968(US)
Inventor: Beazell, Thomas G.
416 Mobile Lane
Charlottesville Virginia 22901(US)
Inventor: Fidler, Horace
1610 Inglewood Drive
Charlottesville Virginia 22901(US)

(74) Representative: Singleton, Jeffrey et al
ERIC POTTER & CLARKSON 27 South Street
Reading Berkshire, RG1 4QU(GB)

(54) Scan conversion apparatus and method.

(57) Scan conversion apparatus that utilises a look-up table (29) for each polar coordinate point to be converted, storing a fill count and a peak detect signal for the point. The fill count signal represents the number of unaddressable pixels to be filled associated with the point. The unaddressable pixels are filled with target data corresponding to the range thereof. Multiaddressable pixels and the unaddressable pixels associated therewith are filled with peak data derived from the maximum of the current target data at the coordinate or the data store in the refresh memory (39) for the coordinate.

## SCAN CONVERSION APPARATUS AND METHOD

The invention relates to scan conversion, particularly with respect to converting input data in polar coordinate format into cartesian coordinate format. Generally, data expressed as a distance and an angle are converted to X,Y coordinate for T.V. type raster scan display. The invention is applicable, for example, in medical imaging, sonar and radar, and will be explained with particularity as applied to radar displays for commercial marine use.

Commercial marine radar systems traditionally utilise an azimuth scanning antenna that typically rotates at approximately 22 RPM and a CRT that displays the radar returns on the screen thereof in rotating scan PPI fashion. The pulse repetition frequency in such systems is a typically low value of 500 PPS. In such systems it is desirable to convert the range (rho) and bearing (theta) data to cartesian (X,Y) coordinates for display on a T.V. type raster scanning CRT. Typically the display is an X,Y matrix of resolution or picture elements (pixels) containing 1000 x 1000 pixels.

In converting the polar coordinates to cartesian coordinates, unaddressed pixels occur in the X,Y matrix when the angular distance between adjacent range sweep or spoke samples is greater than one pixel. In the typical commercial marine radar system specified above, the pixel separation between adjacent range samples at the limit of the sampling range is approximately 4.6 pixels. Collectively, the unaddressed pixels form a Moire pattern. The Moire patterns are repetitive in nature and present an unacceptable picture.

Several procedures are utilised in the prior art that endeavour to eliminate the Moire patterns. One procedure fills in the unaddressed pixels with a linear interpolation of the data which is contained in the addressed pixels surrounding the unaddressed pixels. Another procedure fills the unaddressed pixels with the average data contained in the addressed pixels which surround the unaddressed pixels. These prior art procedures require complex hardware and long processing times to solve the algebraic equations required for each unaddressed pixel. The prior art methods are utilised to best advantage in systems that have the capability of scanning the range and bearing and then utilising the scan conversion apparatus to perform the pixel filling operation. The scan conversion apparatus for commercial marine radar systems must, however, process the radar information in synchronism with the radar antenna rotation and, therefore, long processing times cannot be tolerated.

A second problem that arises in the scan conversion process is with respect to point source radar targets that must be detected by the commercial marine radar systems at short ranges. Because of the conversion process, pixels representing short ranges may be addressed a multiple number of times. Multiple addressing can result in a radar data loss if the scan conversion process does not preserve the radar data for point source targets in multiaddressed pixels. For example, during an antenna scan a point target may be detected in a particular range bin of a particular range sweep. If a subsequent sweep should address the same pixel, but not detect the target, the later data recorded in the same pixel may erase the point target data.

The present invention is defined in the appended claims and provides a scan converter which utilises a look-up table for all of the range and bearing data points generated by the system. Each range and bearing data point in the table has associated therewith a number representative of unaddressed proximal pixels to be filled. In a specific embodiment to the described herein, the fill count represents a number of pixels from 0 to 7. Each pixel that is not addressed by the polar coordinate data is accessed and filled with target data for the pixel range.

Additionally, the prevent the loss of data in multi-addressed pixels, the look-up table contains information which specifies when peak detection is required. In a preferred embodiment of the invention, a binary zero is stored in the table to specify no peak detection and a binary one is stored to specify performing peak detection. The present invention addresses each pixel in the array a minimum number of times, preserves the peak data for each pixel in the array for the current antenna scan, and stores the correct range data for each pixel.

Scan conversion apparatus in accordance with the present invention will now be described in greater detail, by way of example, with reference to the accompanying drawings, in which:-

Figure 1 is a graphical representation of two range spokes illustrating resulting pixel gaps in the conversion from polar coordinates to cartesian coordinates,

Figure 2 is a graphical representation of two radial spokes illustrating the multiaddressing of pixels occuring during conversion from polar coordinates to cartesian coordinates,

Figure 3 is a schematic block diagram embodying the scan conversion apparatus and method of the present invention,

Figures 4-H illustrate further details of the components of Figure 3,

Figure 5 is a graph illustrating the geometry utilised in converting from polar coordinates to cartesian coordinates, and

Figures 6 and 7 are graphs useful in explaining aspects of the fill mode of the present invention.

The scan converter of the present invention is described herein as utilised in a commercial radar system providing radial range sweeps scanned in azimuth with predetermined quantised range bins along each sweep. The system provides, therefore, a quantised set of R (rho), theta coordinates over the azimuth scan of the antenna. The invention converts the R,theta data to corresponding X,Y data for storage in an X,Y refresh memory. The memory provides the radar data to an X,Y raster scan display. The display screen is comprised of an X,Y matrix of pixels corresponding, respectively, to the matrix of X,Y storage locations in the refresh memory.

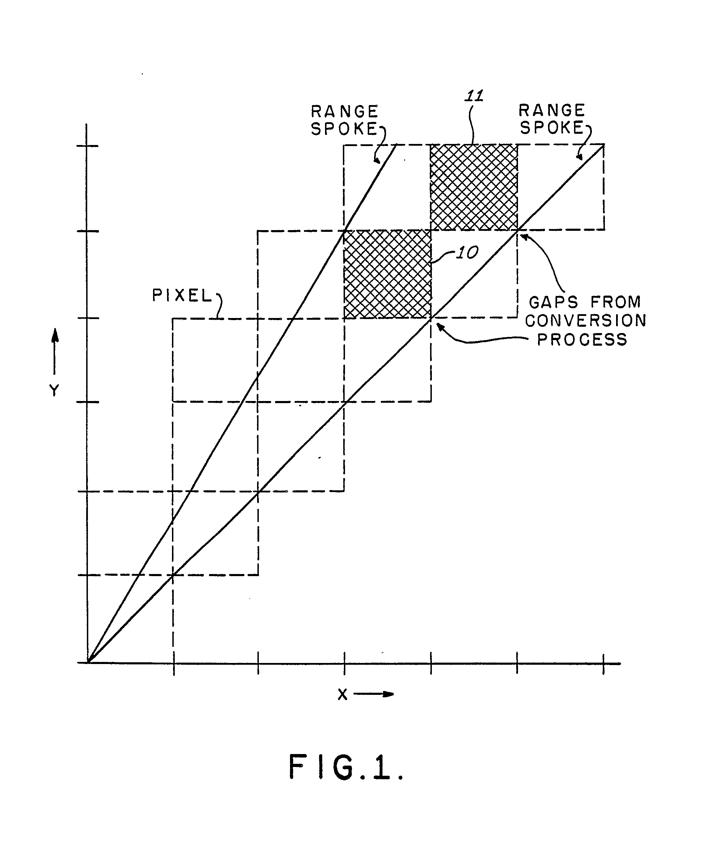

Referring to Figure 1, a portion of the pixel array with two superposed range spokes is illustrated. A range spoke intersecting a pixel is schematically representa tive of the pixel being addressed by the range, bearing points of the spoke. Two unaddressed pixels 10 and 11 are illustrated representing gaps that result from the conversion process. As previously described, the unaddressed pixel gaps result in an undesirable Moire pattern. In the raster scan radar display of the present embodiment, a radial spoke of data is sampled every 360/1024 degrees. This sampled data represents the average radar information for the 360/1024 degree interval at each range bin. The present invention provides the X,Y coordinates corresponding to each range and bearing sample, preferably by means of a sine/cosine look-up table in a manner to be described.

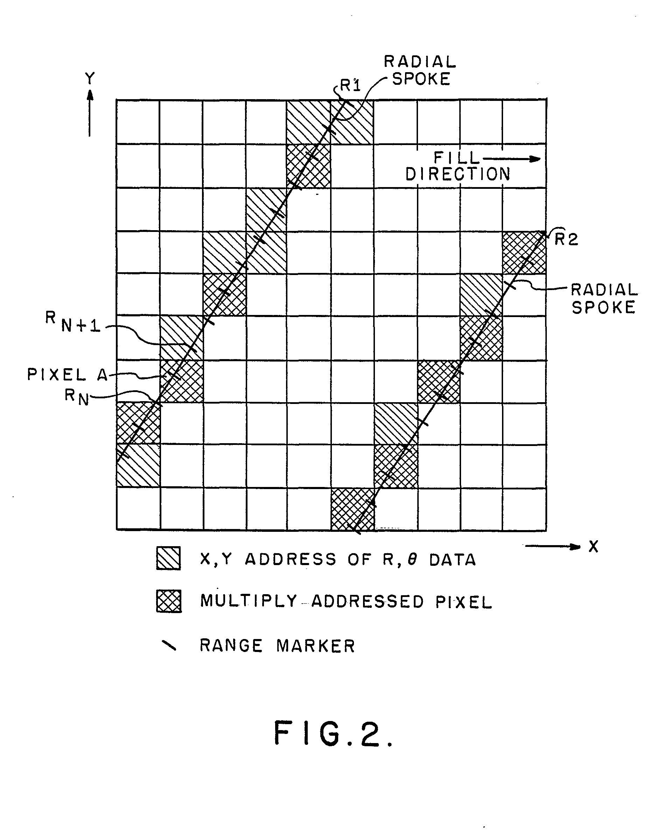

Referring to Figure 2, a portion of the pixel array is illustrated with two radial spokes R1 and R2 superposed thereon with quantised range markers or bins disposed therealong. Pixel A is a multiaddressed pixel because the R,theta-to-X,Y conversion process yields the same X,Y coordinates for the adjacent range samples $R_N$ and $R_{N+1}$ at the bearing of the radial spoke R1. Adjacent bearing samples can also address the same X,Y coordinates. In the case of a multiaddress pixel, it is necessary to write into the pixel the largest data obtained from the multiaddressing range, bearing samples. In this manner, point targets will not be erased from multiaddressed pixels. Thus a comparison or "peak detect" is executed for each multiaddressed pixel in a manner to be explained. The peak detection, however, is not utilised the first time that a multiaddressed pixel is written into for a given scan. This procedure enables all data to be updated once per antenna scan. As indicated by the legend, the singly addressed pixels are designated by diagonal hatching. The multiply addressed pixels are designated by cross hatching. The pixels without any hatching therein are unaddressed pixels. For the portion of the pixel array illustrated in Figure 2, the fill direction utilised in the fill mode to be described, is indicated by the illustrated "fill direction" arrow.

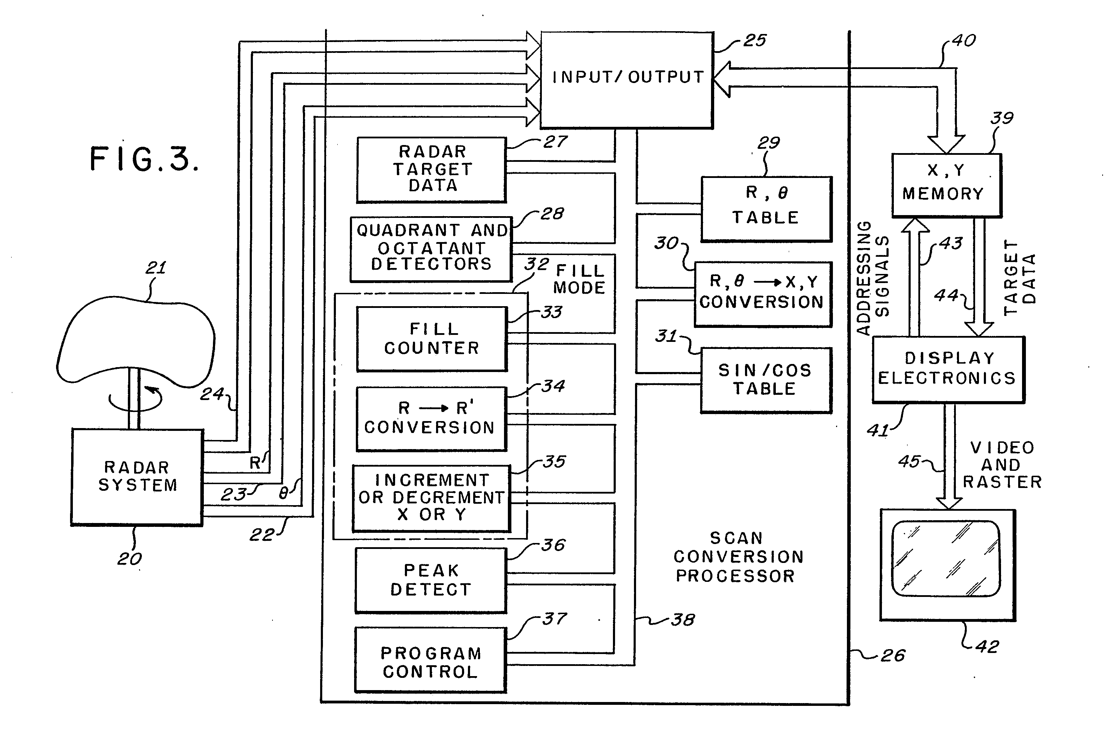

Referring to Figure 3, a radar system 20 provides a range sweep, quantised into plural range bins, along radial spokes established by an azimuthal scanning antenna 21. The bearing (theta) of the range sweeps are provided on a bus 22 and the range R corresponding to the range bins is provided on a bus 23. The radar target data detected at the range, bearing points are provided on a bus 24. The range, bearing and radar target data information are applied to an input/output section 25 of a scan conversion processor 26. The scan conversion processor 26 includes a radar target data buffer 27 for storing the radar target data of the current range sweep. The range information on the bus 23 indexes the buffer 27 for storing the radar target data on the bus 24 in the appropriate range bins of the buffer 27. The scan converter 26 also includes quadrant and octant detectors 28 responsive to the azimuth signal on the bus 22 for providing signals representative of the quadrant and octant in which the current range sweep resides.

The scan conversion processor 26 further includes a scan converter R(rho), theta look-up table 29 providing a storage location for each of the R,theta coordinate points of the radar system 20. Each location in the table 29 stores whether or not the associated pixel requires peak detection and further stores the fill count associated with the pixel. The scan converter 26 further includes a polar-to-cartesian coordinate converter 30 that converts the current R,theta coordinate to equivalent X,Y coordinates in a manner to be described. A sine/cosine look-up table 31 contains sin(theta) and cos(theta) values utilised in the polar-to-cartesian coordinate conversion 30 in a manner to be explained.

The scan converter 26 further includes a fill mode section 32 that fills the unaddressed pixels with correct range data in a manner to be described. The fill mode section 32 includes a fill counter 33 that stores the fill count read from the R,theta table 29 for the current range, bearing coordinate. The fill counter 33 is decremented in order to index the pixels to be filled until the count stored therein attains zero. The fill mode section 32 also includes an R-to-R' conversion section 34 that provides the appropriate range for filling the unaddressed pixels in a manner to be explained. The fill mode section 32 also includes an Increment or Decrement X or Y section 35 that increments or decrements the X or Y coordinate by unity so as to access the unaddressed pixels to be filled. Whether the X or Y coordinate is incremented or decremented is a function of the quadrant in which the current range sweep resides.

The scan converter 26 further includes a peak detect section 36 which, in response to the peak detect signal from the look-up table 29, provides the maximum of the radar data stored at the current range bin or the radar data read from the X,Y memory at the appropriate location thereof.

The scan conversion processor 26 also includes a program control section 37 that times, controls and routes the appropriate signals and data among the components of the processor 26 in a manner to be explained. The elements 25 and 27-37 are interconnected by a bus 38 for communication therebetween.

The input/output section 25 communicates with an X,Y refresh memory 39 via a bus 40. The memory 39 comprises a plurality of locations corresponding respectively to the pixels of the raster scan display. The locations of the memory 39 store the current radar data as addressed by the X,Y coordinates from the polar-to-cartesian coordinate converter 30. The addresses and data signals communicate with the memory 39 via the input/output section 25 and the bus 40. The memory 39 also receives X,Y addresses from the fill mode section 32 as well as fill data indexed by the R-to-R' conversion section 34 via the bus 40.

The display system includes display electronics 41 that generates conventional digital raster scan signals for generating a raster scan on a CRT display 42 and for providing addressing signals via a bus 43 to the memory 39 in synchronism with the horizontal and vertical synchronisation signals of the raster scan. The addressing signals on the bus 43 access the location in the memory 39 corresponding to the pixel on the display of the CRT 42 currently being written by the display beam, thus providing the video signal, via a bus 44, for writing the pixel. The display electronics 41 provides the video data and radar scan signals to the CRT section 42 via a video bus 45.

The display electronics 41 generates the raster scan on the CRT display 42 in rapid fashion while rapidly reading out the refresh memory 39 to provide a bright flicker free display. Concurrently, at the slower antenna scan rate of the antenna 21, the memory 39 is updated with current radar data.

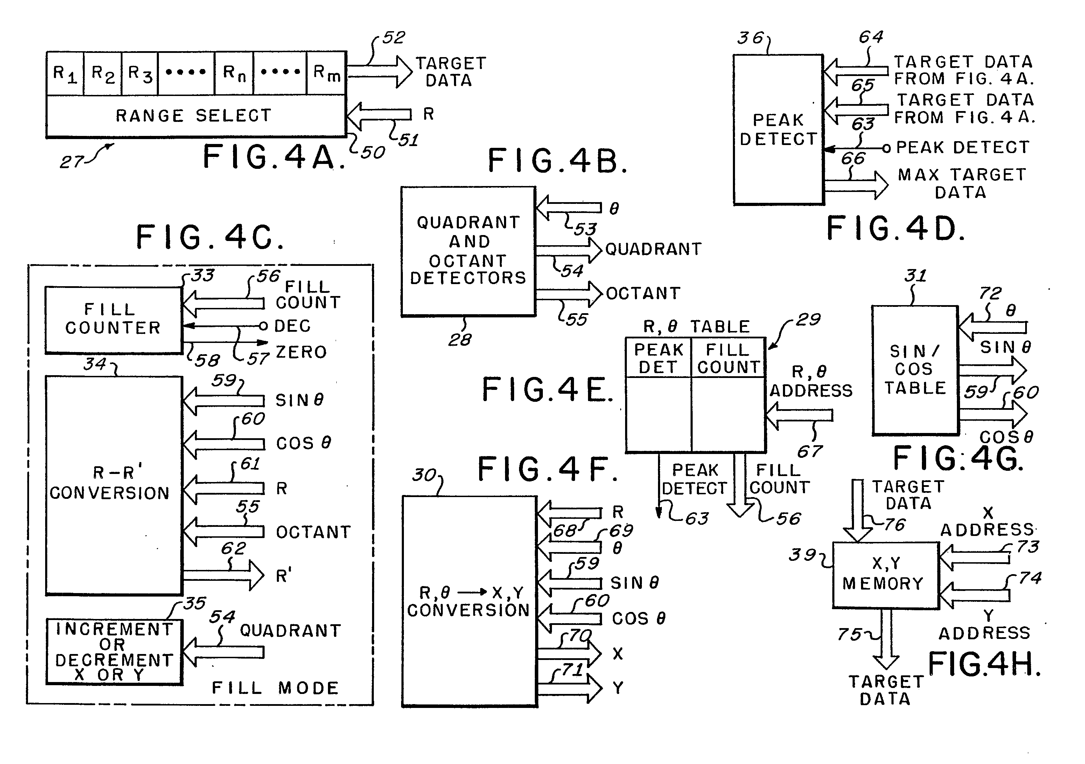

Referring to Figures 4A-H, in which like reference numerals indicate like components with respect to Figure 3, further details of the components of Figure 3 are illustrated. Figure 4A depicts the radar target data buffer 27 that stores the radar data from the range bins of the current range sweep. The data from a particular range bin may be read out by applying an appropriate range request signal to a range selector 50 via a bus 51. The radar data stored in the requested bin is provided on a bus 52. The stages of the buffer 27 store the radar data corresponding to the range markers or bins for the complete current range sweep as exemplified in Figure 2.

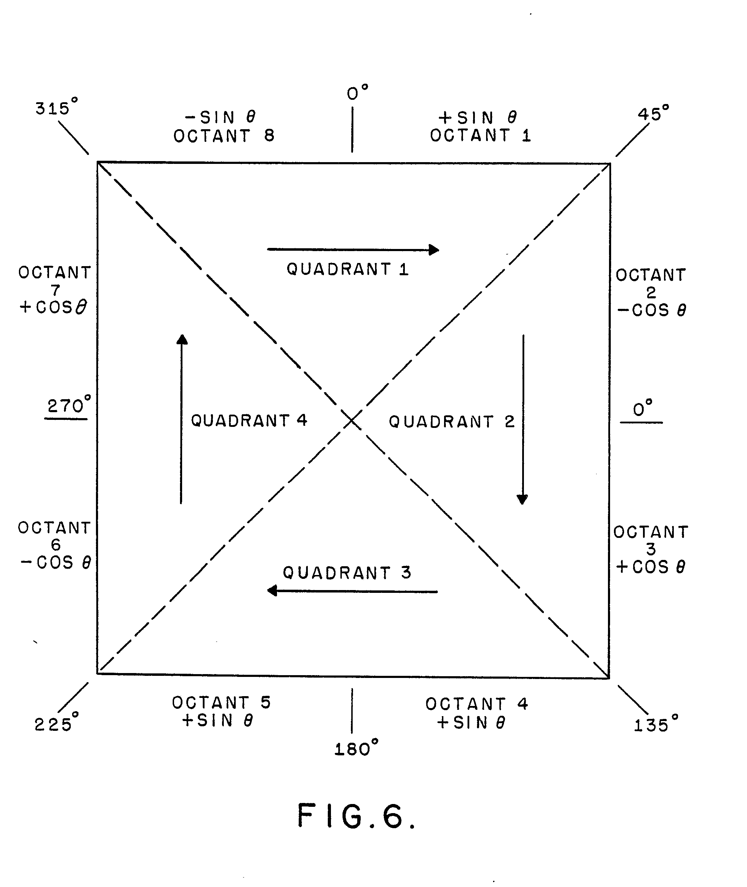

Figure 4B illustrates the quadrant and octant detectors 28. In response to a signal, theta, on a bus 53, the detectors 28 provide a signal on a bus 54 representative of the quadrant in which the current range sweep resides and provides a signal on a bus 55 representative of the octant in which the current range sweep resides. The signal, theta, on the bus 53 is provided by the radar system 20 on the bus 22 (Fig. 3). The quadrant and octant signals on the buses 54 and 55 are provided to the fill mode section for control thereof. Figure 6 illustrates, inter alia, the octant and quadrant arrangement of the system of the herein described embodiment.

Referring to Figure 4C, further details of the fill mode section 32 of Figure 3 are illustrated. The fill counter 33 receives the fill count for the R,theta coordinate being processed from the scan conversion table 29 on a bus 56. During the operation of the fill mode, the fill counter 33 is decremented by unity as each unaddressed pixel is filled until the count therein attains zero. The decrementing is effected by a control line 57 and zero is detected in the counter 33 on a line 58. It will be appreciated that the program control 37 (Fig. 3) provides the decrementing signal on the line 57 and responds to the zero detection signal on the line 58 indicative of completion of the fill mode. The lines 57 and 58 are included in the bus 38 (Fig. 3) as are all of the inputs and outputs illustrated in Figures 4A-G.

Referring briefly to Figure 2, the addressed pixel A has associated therewith five unaddressed pixels in the fill direction to the right and in the same row thereof. Thus the range coordinate $R_N$ at the bearing represented by the radial spoke R1, which addresses pixel A, has a fill count of 5 associated therewith, which at the beginning of the fill mode for this coordinate, is stored in the counter 33. The unaddressed pixels are accessed by maintaining the Y coordinate the same and incrementing the X coordinate by one. When the fill counter attains zero all of the unaddressed pixels have been filled. Referring briefly to Figure 6, the fill direction utilised in each of the four quadrants is indicated by the arrow. Thus Figure 2 illustrates a portion of quadrant 1. In quadrant 2, unaddressed pixels are accessed by decrementing the Y coordinate by unity. In quadrant 3 the unaddressed pixels are accessed by decrementing the X coordinate by unity and in quadrant 4 the unaddressed pixels are accessed by incrementing the Y coordinate by unity.

Referring again to Figure 4C, the R-to-R' conversion 34 is illustrated receiving the octant control signal on the bus 55. Additionally the conversion 34 receives the sin(theta), cos(theta) and R signals on buses 59, 60 and 61 respectively. The conversion 34 provides the R' signal on a bus 62. The sine and cosine signals are provided by the sine/cosine table 31 and the range value R on the bus 61 is the current range coordinate being processed. The R' signal on the bus 62 is applied to the bus 51 of the range selector 50 of Figure 4A to provide the correct range data on the bus 52 for filling the unaddressed pixel being processed.

Referring to Figure 7, a diagram illustrating the geometry of the computations performed by the conversion section 34 is illustrated. The calculation of the unaddressed pixel range yields the range from the radar site to the unaddressed pixel, permitting the pixel to be filled with the true range data instead of an approximation thereto. As illustrated, units of sine or cosine are added to or subtracted from the addressed pixel range R to obtain the range of the associated unaddressed pixel. The number of units of sin(theta) or cos(theta) added or subtracted from R depends on the pixel distance from the addressed pixel. If the unaddressed pixel is adjacent the addressed pixel one unit of sin(theta) or cos(theta) is utilised. If the unaddressed pixel is two pixels distant from the addressed pixel, two units of sin(theta) or cos(theta) are utilised. With reference to Figures 6 and 7 the equation utilised is selected as follows:

octant 1 $R' = R + n \sin(theta)$
octant 2 $R' = R - n \cos(theta)$
octant 3 $R' = R + n \cos(theta)$
octant 4 $R' = R - n \sin(theta)$
octant 5 $R' = R + n \sin(theta)$
octant 6 $R' = R - n \cos(theta)$
octant 7 $R' = R + n \cos(theta)$
octant 8 $R' = R - n \sin(theta)$

where n is the pixel distance of the unaddressed pixel being processed from the addressed pixel associated therewith, and theta is the bearing of the current range sweep. It will be appreciated with reference to Figure 7 that the incremental angles between R and R' are negligible and therefore utilising the current bearing angle, theta, in the computations yields an efficacious approximation. Referring again to Figure 4C, the fill mode section 32 includes the Increment or Decrement X or Y section 35 responsive to the quadrant signal on the bus 54. The section 35 increments or decrements the X or Y coordinate of the currently processed pixel by unity in order to access all of the unaddressed pixels associated with the addressed pixel currently being processed. As explained above with respect to Figure 6: in qaudrant 1 the X coordinate is incremented; in quadrant 2 the Y coordinate is decremented; in quadrant 3 the X coordinate is decremented and in quadrant 4 the Y coordinated is incremented. The incrementing and decrementing starting with the addressed pixel occurs in the direction of the fill arrows illustrated in the quadrants of Figure 6.

Referring to Figure 4D, the peak detector 36 of the scan conversion processor 26 (Figure 3) is illustrated. The peak detector 36 is enabled by a peak detect signal on a line 63 from the scan conversion look-up table 29. Each of the range, bearing coordinates generated by the system has a binary valued peak detection signal associated therewith which is stored in the table 29. The peak detector 36 is responsive to the target data on a bus 64 from the radar target data buffer 27 (Figure 4A) and to the target data on a bus 65 from the X,Y memory 39 (Figure 4H). The peak detector 36 provides the larger of these target data signals on a bus 66. The peak detector 36 is utilised to provide target data to the pixel locations of the memory 39 when the pixel being processed is a multiaddressed pixel. The peak detector 36 provides the target data for the multiaddressed pixel as well as for the unaddressed pixels associated therewith. The target data for the bus 64 is provided from the radar target data buffer 27 by applying the current range coordinate to the bus 51 (Figure 4A). For an unaddressed pixel, the signal R' for the pixel is applied to the bus 51. The target data for the bus 65 is provided from the memory 39 by addressing the memory 39 with the current X,Y coordinates. For unaddressed pixels the X,Y coordinates for addressing the memory 39 is derived from the increment/decrement logic 35 of the fill mode section 32 (Figure 4C).

Referring to Figure 4E, details of the R,theta scan converter look-up table 29 are illustrated. The table 29 contains an entry for each of the R,theta coordinate points of the system. The locations are addressed by the R,theta coordinates on a bus 67. Each entry in the table 29 stores the binary valued peak detection signal and the fill count for the coordinate location. When the table 29 is addressed by an R,theta coordinate point, the peak detection signal corresponding thereto is provided on the lead 63 and the corresponding fill count on the bus 56. The peak detect signal is applied to the peak detector 36 and the fill count is applied to the fill counter 33. Once the parameters of the radar system and the display are established, the data for the table 29 may be derived and stored. If system parameters are varied, the data stored in the table 29 must accordingly be altered. Simple programs for establishing the multiaddressed pixels and the unaddressed pixels and the peak detect and fill count signals therefore are readily derivable by routineers in the art.

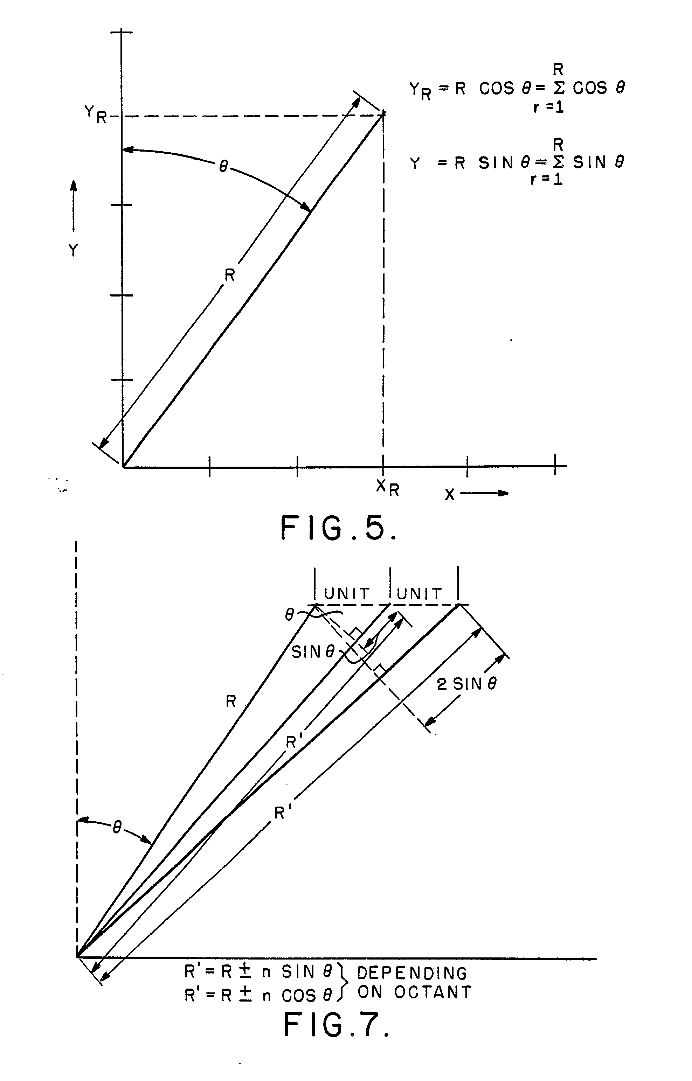

Referring now to Figure 4F, the polar-to-cartesian coordinate converter 30 utilised in the present invention is illustrated. The converter 30 is responsive to the current R,theta coordinate data provided at buses 68 and 69, respectively, and to the sin(theta) and cos(theta) values applied on the buses 59 and 60, respectively, to generate the corresponding X,Y coordinates on the buses 70 and 71, respectively. The calculation of the X,Y coordinates for each range and bearing sample is illustrated in Figure 5. The coordinates $X_R$, $Y_R$ of the radial spoke R are generated by summing the sine and cosine values for the bearing of the radial spoke R times. Summations are utilised in the coordinate conversion process rather than the conventional multiplications because the summation operation is simpler and faster than multiplication. The sin(theta) and cos(theta) signals are provided to the converter 30 from the sine/cosine look-up table 31.

Referring to Figure 4G, the sine/cosine table 31 is illustrated. The table 31 stores values of sin(theta) and cos(theta) and is addressed by the bearing signal on a bus 72. When theta is applied to the bus 72, the table 31 yields sin(theta) on the bus 59 and cos(theta) on the bus 60. These signals are applied to the polar-to-cartesian coordinate converter 30 as well as to the R-to-R$'$ converter 34.

Referring to Figure 4H, the X,Y fresh memory 39 is illustrated. The memory 39 includes a location corresponding to each of the display pixels for storing and providing the target data video. The memory 39 is addressed by X and Y coordinate address signals applied to buses 73 and 74 respectively. When an X,Y coordinate address is applied, the memory 39 provides the target data for the accessed pixel on a bus 75. It will be appreciated that when the addressing signals on the bus 43 (Figure 3) are applied to the memory 39, the target data that is read out is applied on the bus 44 (Figure 3) to the display electronics 41. When the scan converter processor 26 addresses the memory 39 via the bus 40, target data may be read into the accessed location via a bus 76 or read out from the location for inputting to the scan conversion processor 26 via the bus 40 for use in the scan conversion process. It will thus be appreciated that the addressing signals on the buses 73 and 74 may be provided either from the bus 40 or the bus 43 of Figure 3. Additionally, the bus 76 is included in the bus 40 (Figure 3) and the bus 75 may provide data on the bus 40 and on the bus 44.

The scan conversion process for a data point R,theta is as follows:

1. Access the scan conversion table 29 at the R,theta address and load the fill count into the fill counter 33.

2. Generate the X,Y coordinates for R,theta utilising conversion 30.

3.a. Without peak detection: The scan conversion table 29 specifies no peak detection for this point. Write radar data for R from the buffer 27 into the memory 39 at the X,Y address generated in step 2.

3.b. With peak detection: The scan conversion table 29 specifies peak detection for this point. Read radar data from memory 39 at the X,Y address generated in step 2 and write into this location the peak value of this radar data or the radar data from the buffer 27 at the range R.

4. Start fill mode utilising the fill mode section 32.

5. Add or subtract 1 from the X-coordinate or the Y-coordinate in accordance with the quadrant as discussed above with respect to Figure 6.

6. Generate R$'$ for unaddressed pixel utilising the conversion process 34.

7.a. Without peak detection: Write radar data for R$'$ from the buffer 27 into the memory 39 at the X,Y address generated in step 5.

7.b. With peak detection: Read radar data from the memory 39 at the X,Y address generated in step 5 and write into this location the peak value of the read out radar data or the radar data for R$'$ from the buffer 27.

8. Decrement the fill counter 33 by unity.

9. If fill count is greater than zero return to step 5, otherwise end calculation for the current R,theta point. The steps 1-9 are performed for every range and bearing, resulting in each pixel in the X,Y memory 39 being addressed every antenna scan with correct range data being stored. The invention eliminates More patterns and point source targets are preserved by utilising the peak detection process in multiaddressed targets. The scan converter look-up table 29 results in minimum hardware and processing time in utilising the scan conversion procedure of the present invention.

Referring again to Figure 2, the scan conversion process is exemplified for the points $R_N$ and $R_{N+1}$ as follows. The scan converter table 29 contains the information for $R_N$ that peak detection is not required and the fill count is 5. The table 29 contains the information for $R_{N+1}$ that this is a multiaddressed pixel requiring peak detection and the fill count is 5. The conversion into cartesian coordinates for both these points yield the same value of X,Y coordinates. Thus, when $R_N$ is processed the radar data for $R_N$ from the buffer 27 is written into the memory 39 and the radar data for each of the five $R'_N$ from the buffer 27 is written into the respective unaddressed pixels. When $R_{N+1}$ is thereafter processed the peak value of the memory data and the buffer data is written into the X,Y location and the associated unaddressed pixels are written with the appropriate peak data for each $R'_{N+1}$ .

In summary, the present invention provides conversion of radar data from range and bearing to cartesian coordinates, filling missing pixels in the X,Y matrix with the correct radar data for the pixel range and bearing for display upon a raster scan CRT. A radial spoke of data is captured, for example, every 360/1024 degrees and the R,theta coordinates for each data point in the radial spoke are converted to X,Y by the sine/cosine look-up table process described above. In the fill mode for each R,theta point, any pixel which is not addressed by the polar-to-cartesian coordinate conversion is addressed sequentially in the fill direction by the fill mode procedure. As each pixel is addressed in the fill mode, the pixel's effective range is calculated as described above and radar data from the R,theta radial spoke data at the calculated range is written to the pixel. The scan conversion table also provides information concerning which pixels are to be peak detected. Radial spoke points which have multiple addresses to the same pixel are peak detected and the maximum data is written to the cell. This assures the display of point source radar targets. Thus Moire patterns are eliminated by utilising the look-up table procedures of the present invention to store appropriate radar video information in each pixel and utilising peak detection to preserve point source targets.

The above disclosed embodiment of the invention was described in terms of the functional blocks illustrated. It will be appreciated that each of the functional blocks may be implemented by a portion of a software program to perform the functions described. Coding for such software sections is readily derived by the routineer in the art in accordance with the computer system utilised. Alternatively each of the function blocks may be implemented by discrete digital or analog components.

## Claims

1. Scan conversion apparatus for a display system for displaying target data expressed in polar coordinates on a display screen having a matrix of pixels in cartesian coordinates and a refresh memory (39) having a matrix of storage locations corresponding respectively to the pixels, the storage locations being addressable in the cartesian coordinates, the polar coordinates being quantised in a plurality of discrete polar coordinate points corresponding respectively to a plurality of cartesian coordinate points, and each polar coordinate point having a distance (R) coordinate and an angle (theta) coordinate associated therewith and each cartesian coordinate point having an X-coordinate and a Y-coordinate associated therewith, some of the storage locations having addresses not addressable by said cartesian coordinate points , characterised in that the scan conversion apparatus for converting the polar coordinate points to the cartesian coordinate points comprises,

scan converter means (26) for converting each polar coordinate point to a corresponding cartesian coordinate point,

an R,theta table (29) having a plurality of locations corresponding to, and addressable by, the polar coordinate points, respectively, each location storing a fill signal representative of the unaddressable storage locations in the refresh memory (39) associated therewith, and

fill means (32) responsive to the fill signal for accessing each unaddressable storage location and storing therein target data corresponding to the distance coordinate associated therewith.

2. Apparatus according to claim 1, characterised in that the fill signal comprises a fill count signal representative of a number of unaddressable pixels to be filled associated with the current polar coordinate point being converted.

3. Apparatus according to claim 1 or 2, characterised in that the display screen (42) is divided into sectors and in that the fill means (32) comprises means for sequentially filling said unaddressable storage locations in a fill direction dependent on said sector.

4. Apparatus according to any of the preceding claims, characterised in that the fill means comprises:

accessing means (35) for incrementing or decrementing said X or Y coordinate in accordance with the fill direction, thereby accessing the unaddressable storage locations,

range conversion means (34) for adding or subtracting multiples of the sine or cosine of the angle coordinate of the polar coordinate being converted to the distance coordinate of the polar coordinate being converted to provide the distance coordinate associated with the unaddressable storage location being filled, in accordance with the sector in which the polar coordinate being converted resides, and

fill data generating means (27, 28) responsive to the distance coordinate associated with the storage locations being filled for providing the target data corresponding thereto for storage in the unaddressable storage location being filled.

5. Apparatus according to claim 4, characterised in that the fill data generator means comprises:

range sweep buffer means (27) for storing target data associated with a range sweep at quantised distances thereof, and

selector means (28) responsive to the distance coordinate associated with the unaddressable storage location being filled for accessing the target data corresponding to the distance coordinate.

6. Apparatus according to claim 4 or 5, characterised in that fill means includes:

fill counter means (33) for receiving the fill count signal for loading therein, and

decrementing means (35) for decrementing the fill counter means,

thereby indexing the unaddressable storage locations to be filled.

7. Apparatus according to any of the preceding claims, characterised in that the scan converter means comprises:

means (31) for repetitively accumulating the cosine of the angle coordinate of the polar coordinate being converted to provide the corresponding Y-coordinate, and

means (31) for repetitively accumulating the sine of the angle coordinate of the polar coordinate being converted to provide the X-coordinate corresponding thereto.

8. Apparatus according to any of the preceding claims, characterised in that at least two polar coordinate points convert into the same cartesian coordinate point, thereby resulting in a multiaddressed storage location in the refresh memory (39), each location of R,theta table (29) storing a peak detect signal representative of whether or not the associated storage location of the refresh memory is multiaddressed.

9. Apparatus according to claim 8, characterised in that it further includes peak detection means (36) responsive to the peak detect signal for providing to the storage location of the refresh memory (39) being updated the maximum of the target data from the buffer (27) or from the refresh memory in accordance with coordinates currently being processed when the peak detect signal indicates a multiaddressed storage location.

10. Apparatus according to claim 9, characterised in that the location in the R,theta table (29) corresponding to the first multiaddressing polar coordinate point stores a peak detect signal representative of no peak detection and the locations in the R,theta table corresponding to the second and subsequent multiaddressing polar coordinate points store peak detect signals representative of performing peak detection.

11. A method for displaying data expressed in polar coordinates by converting the polar coordinates to cartesian coordinates for display in a system with a display screen (42) having pixels arranged in cartesian coordinates and a refresh memory (39) arranged in a matrix of storage locations corresponding respectively to the pixels, some of the storage locations having addresses not addressable by converted cartesian coordinates, the method comprising the steps of:-

converting each polar coordinate to a corresponding cartesian coordinate,

addressing a $R_1$ theta table (21) having addresses corresponding to polar coordinates of the data, each address storing fill signals for the refresh memory (39),

accessing each unaddressable storage location with the fill signals; and

storing fill data in storage locations accessed by the fill signals.

12. A method according to claim 11, characterised in that it further includes the steps of:-

dividing the display screen into sectors, and

filling the unaddressable storage locations sequentially in a direction determined by the sector.

13. A method according to claim 11 or 12, characterised in that the filling step includes the steps of:-

incrementing or decrementing the cartesian coordinates in accordance with the fill direction, thereby accessing the unaddressable storage locations,

adding or subtracting multiples of sine or cosine functions of angular ordinates of the polar coordinates to establish range ordinates associated with the unaddressable storage locations, and

generating fill data in response to the range ordinate associated with the storage location, and

filling the unaddressable storage location with the fill data.

14. A method according to claim 13, characterised in that the step of generating fill data includes the steps of:-

storing target data associated with a range sweep at quantised distances thereof, and

accessing data corresponding to each range ordinate.

FIG.1.

FIG.2.

FIG.3.

SCAN CONVERSION PROCESSOR

EP 0 299 666 A2

EP 0 299 666 A2

**FIG.4A.**

$R_1$ $R_2$ $R_3$ ••••• $R_n$ ••••• $R_m$ → TARGET DATA  52

RANGE SELECT ← R  51

27  50

**FIG.4B.**

**FIG.4C.**

**FIG.4D.**

PEAK DETECT  36

TARGET DATA FROM FIG. 4A.  64

TARGET DATA FROM FIG. 4A.  65

PEAK DETECT  66  63

→ MAX TARGET DATA

FILL MODE

FILL COUNTER  33

FILL COUNT  56

DEC

ZERO  57  58

R-R' CONVERSION  34

SIN θ  59

COS θ  60

R  61

OCTANT  55

→ R'  62

INCREMENT OR DECREMENT X OR Y  35

QUADRANT  54

**FIG.4E.**

QUADRANT AND OCTANT DETECTORS  28

θ  53

→ QUADRANT  54

→ OCTANT  55

R, θ TABLE  29

| PEAK DET | FILL COUNT |
|---|---|

R, θ ADDRESS  67

PEAK DETECT  63

FILL COUNT  56

**FIG.4F.**

R, θ → X,Y CONVERSION  30

R  68

θ  69

SIN θ  59

COS θ  60

X  70

Y  71

**FIG.4G.**

SIN / COS TABLE  31

θ  72

SIN θ

COS θ  59  60

**FIG.4H.**

X,Y MEMORY  39

TARGET DATA  76

X ADDRESS  73

Y ADDRESS  74

TARGET DATA  75

$$Y_R = R \cos \theta = \sum_{r=1}^{R} \cos \theta$$

$$Y = R \sin \theta = \sum_{r=1}^{R} \sin \theta$$

## F I G. 5.

$$R' = R \pm n \sin \theta$$
$$R' = R \pm n \cos \theta$$
DEPENDING ON OCTANT

## F I G. 7.

FIG.6.